# EUROPEAN PATENT SPECIFICATION

(11) **EP 3 569 339 B1**
(45) Date of publication and mention of the grant of the patent: **23.09.2020**
(21) Application number: 18172514.4
(22) Date of filing: 15.05.2018
(51) Int. Cl.: B23G 1/20

(54) **A MACHINE TOOL AND METHOD FOR THREAD CUTTING**
WERKZEUGMASCHINE UND VERFAHREN ZUM GEWINDESCHNEIDEN
MACHINE-OUTIL ET PROCÉDÉ DE DÉCOUPE DE FILS

(43) Date of publication of application: 20.11.2019
(73) Proprietor: OÜ Inchworm Machines, 60205 Peipsiääre vald (EE)
(72) Inventor: KULL, Priit, 50603 Tartu (EE)
(74) Representative: Sarap, Margus

(56) References cited:
- EP-A2- 1 004 397
- US-B1- 6 569 071
- DATABASE WPI Week 201817 Thomson Scientific, London, GB; AN 2018-161936 XP002786762, -& CN 207 013 822 U (LONGKOU CONGLIN IND ALUMINIUM CO LTD) 16 February 2018 (2018-02-16)
- DATABASE WPI Week 201202 Thomson Scientific, London, GB; AN 2011-Q46720 XP002786763, -& CN 202 052 996 U (UNIV GUIZHOU) 30 November 2011 (2011-11-30)
- DATABASE WPI Week 201782 Thomson Scientific, London, GB; AN 2017-78766N XP002786766, -& CN 206 643 466 U (CHINA AVIATION LITHIUM BATTERY LUOYANG) 17 November 2017 (2017-11-17)

## Description

### Technical field

The present invention is related to a mechanical industry and its automation, specifically to a machine tool for thread cutting in hole patterns. Thread holes are a common feature in many man made items. In many cases the thread holes of the same size form patterns. For example, bolt rings on round flanges or rectangular patterns in anchor plates. The proposed invention offers an efficient and scalable method and device for cutting threads into such predrilled hole patterns of the same size.

### Background Art

There are many methods in existence for fabricating thread holes. For example, Thread tapping, thread forming, thread milling.

Multi-spindle tapping heads with fixed spindle positions are effective at mass production of identical hole patterns with limited number of holes. Different hole patterns need a new custom-made tool. The total size of the work envelope is limited by the size of the tapping head.

Multi-spindle tapping heads with adaptable spindle positions can be reconfigured for different hole patterns. They are good for mass producing of similar hole patterns with limited number of holes. They tend to be very complicated mechanisms. The total size of the work envelope is limited by the size of the tapping head.

Holes in patterns can be treated as holes without a pattern, like it is usually done in the traditional CNC machine tool generic machining process. Typically, a universal CNC machine tool is equipped with a much more powerful spindle than is needed for cutting a thread, which will lead to higher cost than necessary. The total size of the work envelope is limited by the size of the machine tool work envelope.

Holes in patterns can be tapped by using a spindle, manipulated and oriented by a general purpose industrial robot arm. Such setup will need a method for aligning the robot arm and the object, which usually means a dedicated workstation equipped with positioning fixtures. The total size of the work envelope is limited by the size of the work envelope of the robot arm. The work envelope can be increased by adding more degrees of freedom to the robotic system in the form of rotary tables or linear moving axis. The accuracy of spindle positioning will decrease with the size of the system, which will lead to implementing a secondary positioning system for precise positioning, like machine vision or mechanical feelers. Increasing the size of the fabricated items leads quickly to the exponential cost increase of such systems. Manually positioned articulated tapping arm spindles can be used for unlimited size hole patterns, but they need an operator presence at all times and they need a secondary method for repositioning to the next work envelope. They also only work well when the hole axis is vertical. Manual systems do not produce a quality record, which can be critical in some industries.

Magnetically clamped manual tapping presses can be used for unlimited size hole patterns, but they need an operator presence at all times. They only work with magnetic materials. Manual systems do not produce a quality record, which can be critical in some industries.

Therefore, a scalable automated tapping system is needed, that can cut threads in any size of arbitrary hole patterns, without causing exponential cost increase, which can be reprogrammed, which can work in any position, and which can produce a quality record.

Multi-spindle tapping heads with fixed spindle positions are described in document US3,765,787, Firth Machine Tools Ltd., 16.10.1973 where a multi-spindle drilling unit or head comprises a rear casing half, secured by means to a front casing half, both casing halves being recessed internally to accommodate a gear train transmission which is generally conventional and will not be described in detail. A gear wheel fast by means of splines with one spindle forms a part of a B level gear train and a gear wheel fast with a spindle forms part of a C level gear train. The three gear trains A, B and C serve to drive spindles at different speeds depending on the required cutting rate for each individual cutting tool. Each train will drive several spindles.

Document US6,569,071, University of Michigan, 17.06.2002 describes a multi-spindle tapping heads with adaptable spindle positions where the multi-spindle head may comprise one or more spindle head modules. The modules may be interconnected by one or more connectors that may be designed for quick assembly and disassembly. Each module may be reconfigurable for frequent changes and for changes within a part family. By adding or removing modules, the multi-spindle head may also be reconfigured for less frequent changes and for changes across part families.

Document CN207013822U discloses a tapping machine according to the preamble of claim 1. This machine is composed of an upper end tapping head and a lower rotating arm, the bottom of the rotating arm is fixed with an aluminum pushing table, the aluminum pushing table is made of an upper aluminum profile and a lower aluminum profile connected by a high-precision ball structure connection; above the aluminium push table is arranged a groove, and three tapping machines are fixed in sequence above the groove. The lower aluminum profile of the aluminum push table is fixed at the bottom, and the tapping machine fixed to the upper aluminum profile can be slid by a high-precision ball structure connected to the lower aluminum profile, at the time of tapping, the tapping machine the tapping head performs tapping. For the target members in multiple directions, the position of the tapping head can be adjusted by the rotation of the rotating arm to achieve multidirectional tapping.

### Disclosure of Invention

The aim of the present invention is to provide a cost-effective method for cutting threads in any size of arbitrary hole patterns, that consist of the same size holes with parallel axis, that can be oriented in space in any direction.

Current approaches to the task of tapping hole patterns suffer from one or several of the following shortcomings.
1. The hole patterns are rigidly defined by the hardware (fixed multi-spindle tapping heads).
2. The hole patterns are limited by the size of the work envelope of the tool or machine (fixed and adjustable multi-spindle tapping heads, general purpose machine tools, tapping spindles manipulated by general purpose industrial robot arms).
3. No quality record is produced by the apparatus (articulated arm manual tapping spindles, magnetically clamped manual tapping presses).
4. High cost associated with manual labour (articulated arm manual tapping spindles, magnetically clamped manual tapping presses).
5. Increasing the size of the fabricated item leads quickly to the exponential increase of the cost of tapping operations (general purpose machine tools, general purpose industrial robot arms)
6. Using too powerful spindles for the tapping tasks, thus wasting energy and increasing cost (general purpose machine tools).
7. Moving around very heavy equipment to locate the tapped hole, thus wasting energy and increasing cost (general purpose machine tools, general purpose industrial robot arms).
In order to overcome the above shortcomings, a machine tool for thread cutting according to claim 1 is proposed. The machine tool of the invention, which can be described as a scalable robotic tapping device, consists of two spindles with tapping tools, linked to each other by a mechanism that will allow to dynamically adjust the distance between the rotation axis of the spindles and at the same time move the spindles relative to each other in the direction parallel to the rotation axes, thus adjusting the distance between the spidles. The device has no permanent foundation. The device will be locked to the fabricated item by the means of the tapping tool in the first spindle while the other tool in the second spindle is cutting the thread in the next hole. The thread cutting will continue until the spacer of the second spindle will come into contact with the surface around the hole. A force sensor integrated into the spacer will stop the rotation of the second spindle. The force loop comprising of the stretched tapping tool locked inside the finished hole and the compressed spacer provides a stable anchor point for the next operation. The force sensor is set to the clamping force that will avoid damage to the thread in the hole and the surface of the item. The clamping force can also be limited by limiting the torque generated by the spindle motor. When the spacer comes into contact with the item's surface around the hole the torque will increase until the set limit is reached and the motor will stop. The first spindle drive will be reversed; thus, the first tapping tool will exit the first hole. The relative axial feed drive will lift the tool in the first spindle to the safe elevation above the pattern plane. Since the rotor of the second spindle is locked, applying power to the second spindle will now rotate the first spindle around the axis of the second spindle thus positioning it above the next untapped hole. If the hole pattern is irregular the drive adjusting the distance between the spindle axis can be used for setting the correct distance. The spindles switch their function and the cycle starts from the beginning. Advantageously, all drives are numerically controlled and a CAM software with suitable post processor can be used for generating the G-code. The tapping feed drive can be synchronous: defined by the axial feed drive; or defined by the tapping tool, the axial feed will start the thread and then follow the tool pitch. The device can also be operated from a hand-held control device. The device can also be positioned manually.

If the hole pattern is too dense for the device to tap the adjacent holes, the device can skip some holes and take several passes to finish the complete pattern. A cradle fixture will be attached to the fabricated item to start and finish the process. Additional fixtures can be used if the hole pattern has gaps that the device cannot overstep.

The device overcomes all the above-mentioned shortcomings as follows:
1. The hole pattern is freely programmable and can be modified from item to item by simply changing the machining program.
2. The pattern size is only limited by the complexity of the logistics associated with handling the cables and hoses that are needed for operating the device. The device itself has no pattern size limitations.
3. The device can provide quality records like any other CNC machine tool.
4. The device is fully automatic and requires minimum amount of manual labour.
5. The cost increase associated with the size increase of the fabricated item is linear. It still takes longer to carry out the operation, but the device cost does not scale up.
6. The size of the device is limited by what a tapping tool can carry. One device cannot cover all thread sizes, it only can cut threads within a close range of thread sizes, therefore the spindle power and energy needs will be optimized for the work at hand.
7. As the device is self-propelled it is operating only in its own small work envelope, therefore it is lightweight compared to any none scalable systems, therefore the energy needs are minimal.

In addition, the device has other unique properties. The holes are never clean during the machining process. If a contaminated hole is used for anchoring a mobile platform the thread in the hole can easily be damaged. The threads are guaranteed to be clean only before the tapping tool is removed from the hole. This offers a unique opportunity to use the device as a mobile platform for carrying out auxiliary processes like cleaning the downstream holes, gauging-, lubricating and plugging them.

In summary, the primary aim of the present invention is to reduce the cost of manufacturing associated with tapping operations. Estimated savings up to 80% compared to traditional CNC machine tools, depending on the size of the object. Reducing the lead-time of new product introduction as the process has low demand for specific hardware adaptations like purpose built tools and fixtures.

Reducing the manufacturing cycle time, thus reducing the work in progress and tied up cash in the manufacturing pipeline. The cost reduction is flexible as there is no predefined limit on the number of actors in parallel; this is depending on the available space and size of investment.

### Brief description of Drawings

The components in the drawings are not necessarily drawn to scale, the emphasis instead being placed upon clearly illustrating the principles of the present disclosure. The driving mechanisms shown in the drawings represent generic drives that can be used for actuating the device. Other types of drives and movements can be implemented to achieve the same functionality. For example, suitable rotary actuators can be used for adjusting the distance between the tapping spindles instead of a linear drive pictured in this embodiment. Moreover, in the drawings, like reference numerals designate corresponding parts throughout several views. The present invention is described in detail with references to the drawings where in
Fig 1 is a general isometric view of the a machine tool for thread cutting according to the present invention;
Fig 2 shows the elements of a spindle block of the machine tool in a section view and in an exploded view;
Fig 3 shows the elements of the axial feed mechanism of the machine tool;
Fig 4 shows the machine tool in two extreme positions in the axial direction;
Fig 5 shows the elements of the mechanism for adjusting the distance between the spindles of the machine tool;
Fig 6 shows the machine tool according to invention in two positions, when the distance between the spindles is set to minimum and maximum;
Fig 7 to Fig 12 describe one tapping cycle of the machine tool;
Fig 13 illustrates the machine tool at work on a circular hole pattern;
Fig 14 demonstrates an additional manipulator attached to the machine tool for carrying out auxiliary tasks.

### Detailed description of embodiments

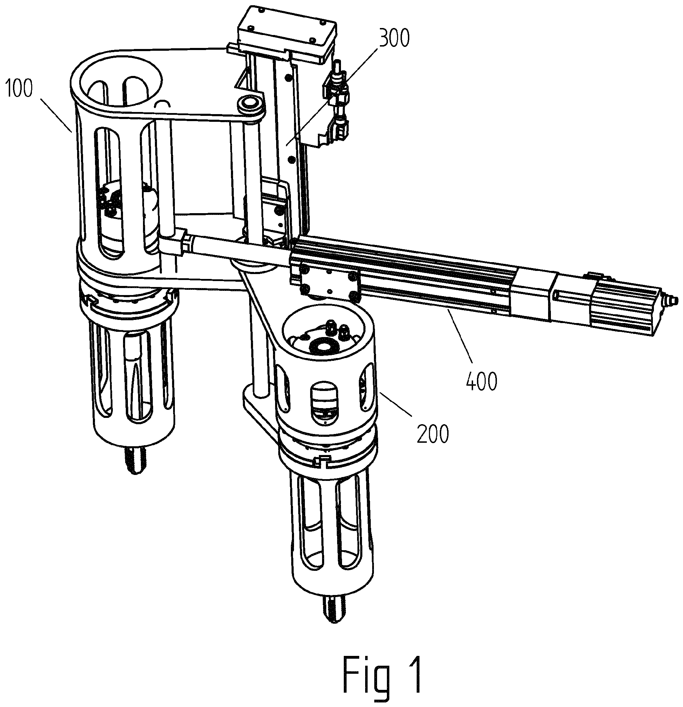

Referring to Fig 1 an embodiment of a machine tool for thread cutting according to the invention is shown. The device may be referred to as a scalable robotic tapping device. It consists of two linked spindle blocks 100 and 200. The spindle blocks are linked in a way that their relative position can be changed along their rotation axes by drive 300 and the distance between their rotation axes can be adjusted by drive 400. The current invention is not limited to the drives used in the embodiment. The drives 300, 400 represent generic drives of any configuration or type that can actuate the motion of the device. The following figures show just one possible realisation of such a mechanism. Other mechanisms can be used for the same functionality.

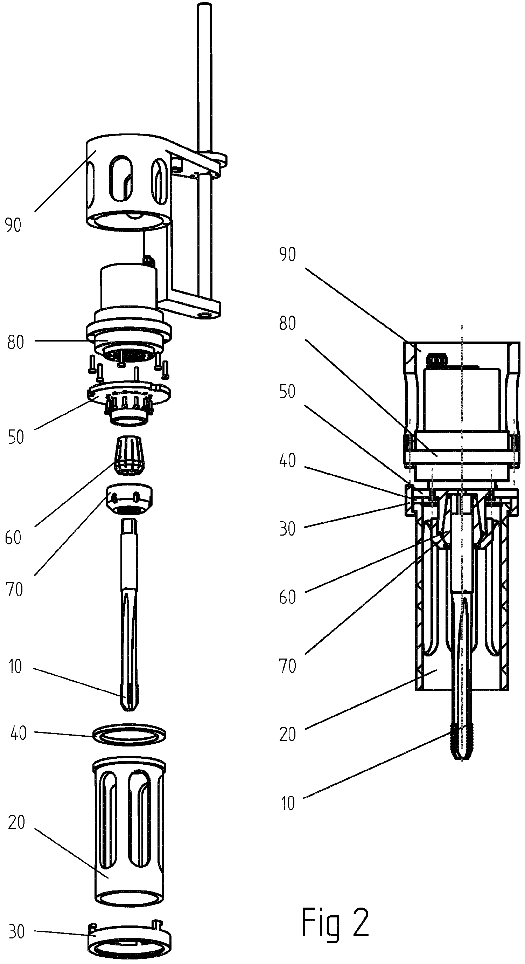

The spindle blocks 100 and 200 are, as far as operating the tapping tool, functionally equal and they contain the same elements as shown in Fig 2. 10 is a tapping tool attached to the spindle tool holder 50. A hard stop spacer sleeve with integrated force sensor is attached to the spindle tool holder 50 with a stop sleeve retainer 30, which allows spacer sleeve 20 to rotate relative to the spindle when the spacer sleeve comes into contact with the surface of the tapped component and is stopped by it.

The difference between the length of the tapping tool 10 and the length of the hard stop spacer sleeve 20 determines the depth of the thread. A thrust bearing 40 is placed between the spindle tool holder and the hard stop sleeve spacer that will come into action when the stop spacer sleeve 20 is in contact with the tapped item. At this moment some slippage will take place. The thrust bearing 40 makes certain that the slippage will happen between the stop spacer sleeve and the spindle. If the sleeve slipped on the item surface it may damage the surface and cause rapid wear of the stop spacer sleeve. The spindle tool holder 50 is attached to the rotor part of the spindle drive motor 80. A collet 60 clamps the tapping tool 10 in the spindle. The collet nut 70 brings the collet 60 in action. The current invention is not limited to this tool clamping method. Any industry known tool clamping methods could be used. The spindle block comprises a spindle drive 80. The current invention is not limited to the spindle drive shown in the current embodiment. It represents a generic drive of any configuration or type that can actuate the spindle. An electric gear motor is used in this realisation, but suitable hydraulic or pneumatic drives can also be used. The drive motor has dual function. The same drive is used for actuating the tapping tool in the tapping episode and the same motor is used for positioning the other spindle in the episode of moving to the next hole. While the accurate angular position is not critical for the tapping episode, it is very important for positioning the other spindle in the moving episode. Therefore, the spindle drive needs a high resolution feedback device. In this embodiment a built in rotary encoder of the gear motor is used for the feedback of the angular position. The spindle block housing 90 is attached to the stator part of the spindle drive 80. Another embodiment of the current invention may use one motor to drive both spindles by the means of timing belts, or similar and suitable coupling devices.

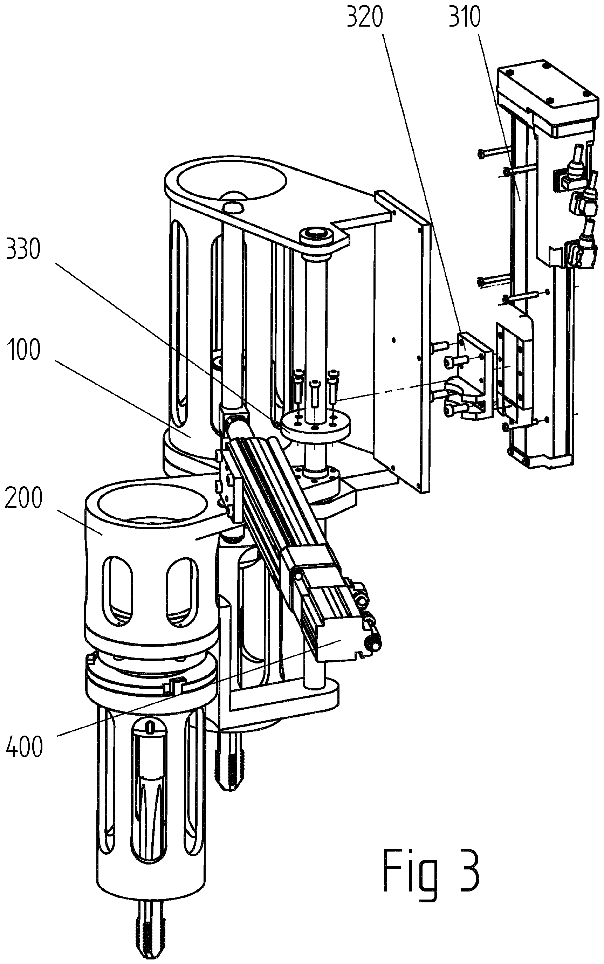

An axial feed mechanism 300 will move the spindle blocks 100 and 200 relative to each other along the axis of the tapping tools. This motion is needed for providing the axial feed during the thread cutting episode. It is also used for lifting the free spindle above the surface of the item with holes, so it can be positioned above the next hole to be tapped. The current invention is not limited to the the exact form of realisation of axial feed mechanism shown in this embodiment. Fig 3 describes the elements of the axial feed mechanism of the current embodiment of the invention. The axial feed mechanism comprises an electrical linear drive 310. The housing of the electrical linear drive is fixed to the spindle block housing 90 of the first spindle block 100. The moving element of the electrical linear drive 310 carries the interface part 320 that comes in contact with the reaction flange 330. The reaction flange 330 is fixed to the spindle block housing 90 of the second spindle block 200. When the linear drive 310 is actuated the relative height of the two spindle blocks will change independent from the distance between the spindle axis. Any other suitable actuation method can be used, like hydraulic or pneumatic drives.

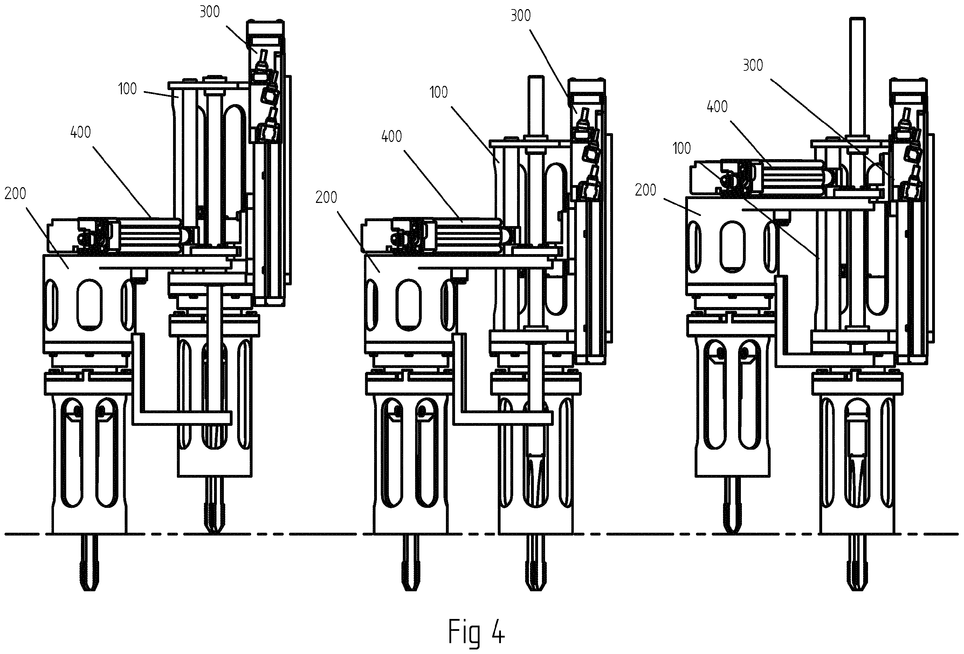

Figure 4 shows the machine tool in different positions in the axial direction. On the left image spindle block 200 is in front of the spindle block 100 (as if the spindle 200 locked in a finished hole and spindle 100 is positioned above the surface for moving to the next hole). In the right image spindle block 100 is positioned in front of spindle 200 (as if the spindle 100 locked in a finished hole and spindle 200 is positioned above the surface for moving to the next hole). In the middle image both spindles are in the same axial position (as if both tools have reached the end of the tapping stroke). The device has no permanent reference frame without the tapped item, therefore the positions are relative and the left and right image constitute the full relative axial stroke of the device.

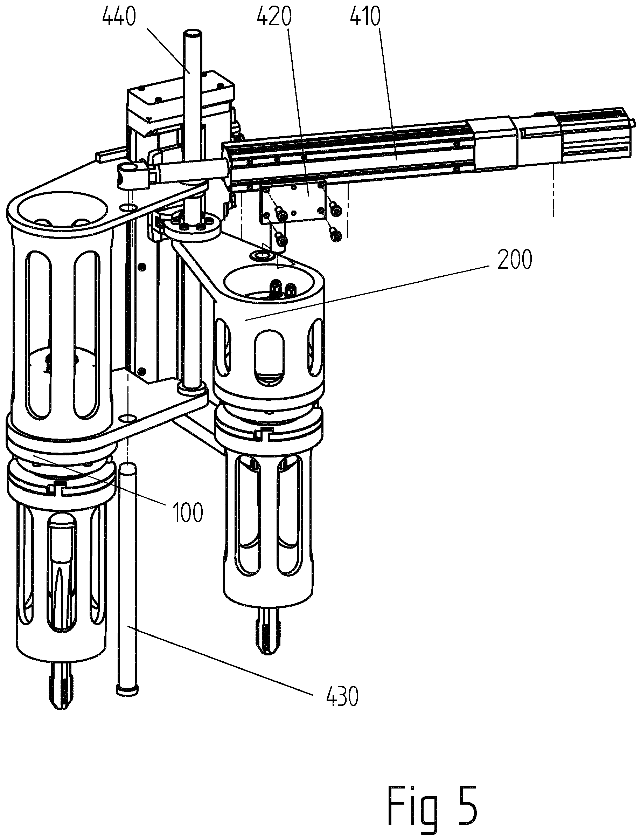

The most advanced embodiment of the device has a mechanism that can dynamically adjust the distance between the spindles at any time. The current invention is not limited by the mechanism of the embodiment shown in the figures. Fig 5 describes the elements of the mechanism for adjusting the distance between the spindles in the current embodiment of the invention. The mechanism for adjusting distance between the spindles comprises an electrical linear drive 410, housing of which is attached to a bracket 420 with a pivoting axis. The pivoting axis of the bracket 420 is inserted into a bushing in the spindle block housing 90 of the spindle block 200. The rod end of the actuator is attached to the reaction axis 430 attached and fixed to the spindle block 100. When the axial feed mechanism 300 is operated, the rod end will slide along the reaction axis, thus allowing to set the distance between the spindles independently from the relative axial position of the spindle blocks 100 and 200. When the drive 410 is actuated the spindle blocks 100 and 200 will change their relative distance between their spindle axis by pivoting around the pivot axis 440. The pivot axis is fixed to the spindle block housing 90 of the spindle block 200. The reaction axis 430 is fixed to the spindle block housing 90 of the spindle block 100. Any other suitable actuation method can be used for adjusting the spindle distance, like hydraulic or pneumatic drives, or even rotary drives mounted to the pivot axis 440.

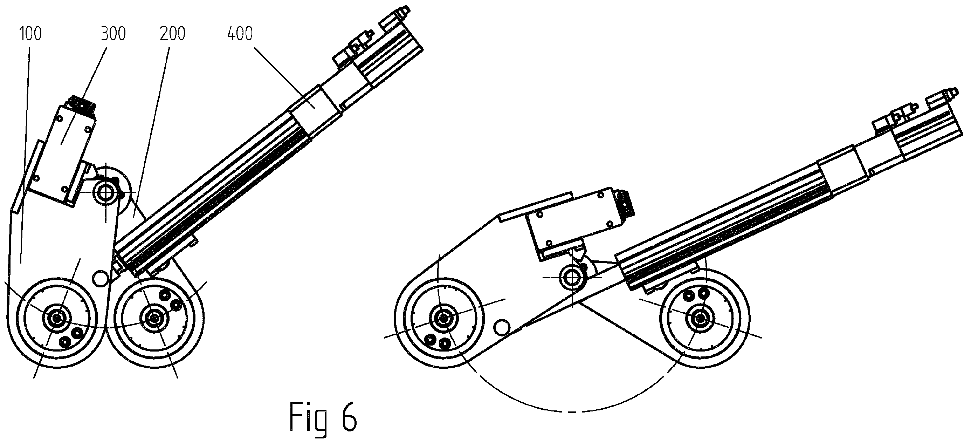

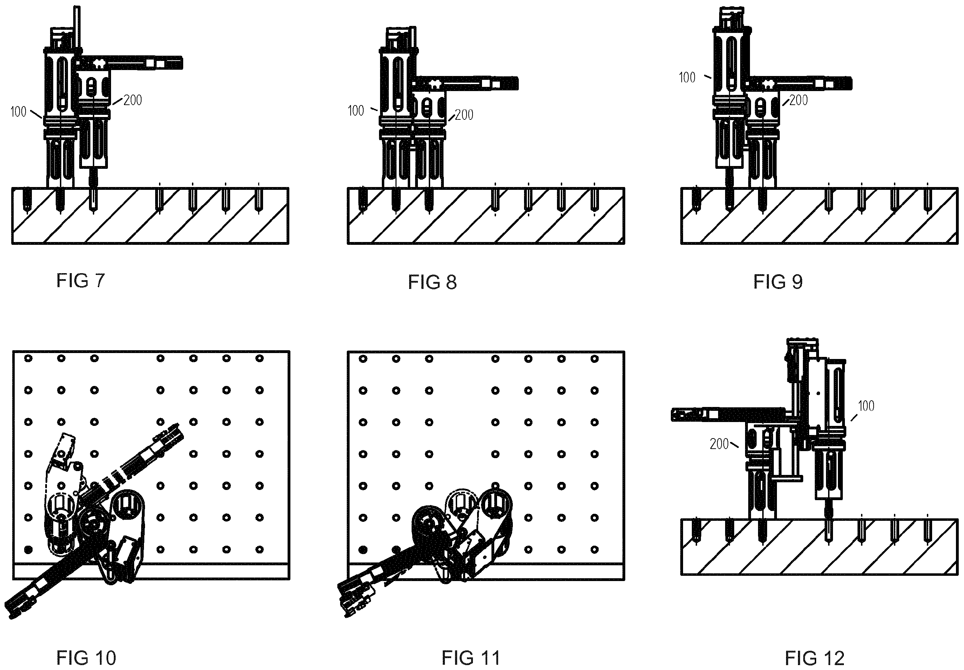

Figure 6 shows the device in two extreme positions where the spindle blocks 100 and 200 are touching each other and are moved the furthest apart. Figures 7 to 12 describe one tapping cycle of the machine tool. In Fig 7 the tapping tool 10 of the spindle block 100 has reached the bottom of the thread. The spacer 20 is in contact with the item surface and the rotor of the spindle block 100 is locked. Spindle block 200 is aligned with the next hole.

Spindle drive 80 of the spindle block 200 is activated and the tapping tool 10 of the spindle block 200 starts rotating. The axial feed drive 300 inserts the end of the tapping tool into the next hole and the thread is tapped. When the spacer 20 of the spindle block 200 comes into contact with the item's surface the integrated force sensor stops the rotation of the spindle drive 40 of the spindle block 200. Both rotors of both spindle drives 80 are locked as depicted in Fig 8.

Spindle drive 80 of the spindle block 100 is reversed and the tapping tool 10 of the spindle block 100 is wound out of the hole. Axial feed drive 300 lifts the spindle block 100 to a safe distance from the item surface as depicted in Fig 9.

Spindle drive 80 of the spindle block 200 is activated. As the rotor of the spindle drive 80 of the spindle block 200 is locked, the whole device will turn around the spindle axis of the spindle block 200 as depicted in Fig 10. This way spindle block 100 is aligned with the next hole.

If the distance between the holes is different, the drive 400 is activated to adjust the distance between the axes of the spindle blocks (Fig 11).

In Fig 12 the device has reached the initial position to start the next cycle.

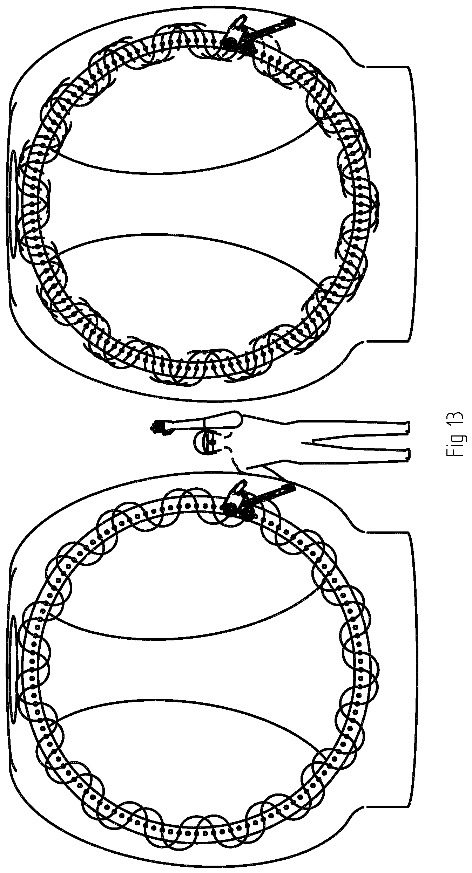

The device can tap hole patterns of any shape, regular or irregular. Fig 13 illustrates a case where the device is tapping a round bolt ring flange in two passes. The holes are paced too close to each other for the device to tap adjacent holes, therefore the device will skip a hole and machine the skipped holes in the next pass.

An embodiment of the device may contain a cradle fixture or docking station to automatically start and finish the cycle. Bridge fixtures may be used to change foot or jump gaps.

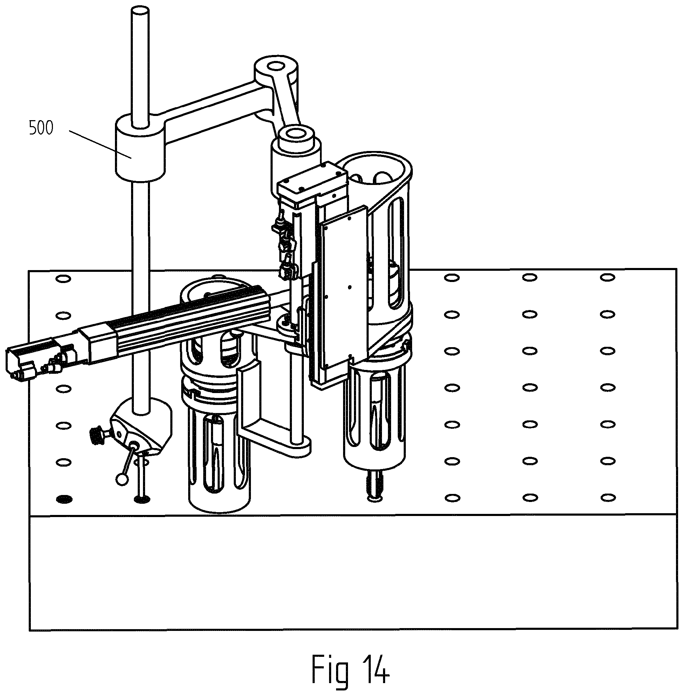

The device can be used as a mobile platform for carrying additional manipulators, which can carry out auxiliary tasks. For example, cleaning and lubricating the finished threads, gauging the quality of the holes, plugging the checked threads to protect them from further contamination. The auxiliary manipulator can also be used for preparing the holes for tapping ahead of the tapping spindles, like cleaning and lubricating them. A SCARA type robotic arm is depicted in Fig 14 mounted on the pivot axis of the two-spindle drive mechanism. In a preferred embodiment, the machine tool of the invention forms part of a kit, which also comprises expandable locking rods. In this embodiment, the expandable anchoring rods are used in place of the tapping tools, so that the device of the invention can also be used as a self-propelled mobile platform that can use hole patterns with threads or without threads as anchor points.

Finally, while various embodiments have been described and illustrated, the disclosure is not to be construed as being limited thereto. Various modifications can be made to the embodiments by those skilled in the art without departing from the scope of the invention as defined by the appended claims.

### List of details:

- 100: - Spindle block
- 200: - Spindle block
- 300: -Axial feed drive
- 400: - Spindle distance drive
- 500: - Manipulator
- 10: - tapping tool
- 20: - hard stop spacer sleeve
- 30: - hard stop retainer
- 40: - thrust bearing
- 50: - tool holder (spindle)
- 60: - collet
- 70: - collet nut
- 80: - spindle drive motor
- 90: - spindle housing
- 310: - axial feed actuator
- 320: - axial feed actuator interface
- 330: - axial feed reaction flange
- 410: - spindle distance actuator
- 420: - rotating bracket
- 430: - reaction axis
- 440: - pivot axel

## Claims

1. A machine tool for thread cutting comprising at least two spindle blocks (100, 200) with tapping tools (10), linked to each other by a mechanism (400, 300) that will allow the adjustment of the distance between the rotation axes of the spindles (100, 200) and the movement of the spindles (100, 200) relative to each other in the direction parallel to the rotation axes, **characterised in that** each spindle block comprises a hard stop spacer sleeve (20) with a force sensor, a tool holder (50) attached to the rotor part of the spindle drive (80) and a spindle block housing (90) attached to the stator part of the spindle drive (80).

2. The machine tool according to claim 1 further comprising an additional manipulator (500) for carrying out auxiliary tasks, while the spindle blocks are carrying out the primary task of cutting the thread.

3. A kit comprising the machine tool according to claim 1 or claim 2 and expandable locking rods, which can replace the tapping tools, thus converting the apparatus into a universal self-propelled platform for operating in hole patterns.

4. A method for thread cutting with the machine tool according to either claim 1 or claim 2, wherein
- the machine tool is locked to the fabricated item by the means of one of the tapping tools (10) in one spindle block (100 or 200), while
- the other tool (10) in the other spindle block (200 or 100) is cutting the thread in the next hole,
- when the other tool (10) reaches the end of the thread, the spindle rotor will lock itself in the hole by stretching the tapping tool (10) and compressing the spacer sleeve (20), thereafter
- the first spindle is reversed, thus unlocking the rotor of the first spindle block (100 or 200),
- after the tapping tool of the first spindle block (100 or 200) has exited the hole the second spindle block (200 or 100) is free to rotate, thereafter
- applying torque to the second spindle will now rotate the device around the axis of the second spindle and position the first spindle above the next hole.
- the spindles change their roles and the cycle repeats itself until all holes in the detail are tapped.

5. The method according to claim 4, wherein the drive (400) controlling the distance between spindles is operated to match the distance between the holes and the spindles.

6. The method according to claim 4, wherein the drives (80) of the spindle bocks (100, 200) act in dual functions, first as a drive, that provides the torque for the tool (10) in the tapping episode, and second as a drive, that moves the device in the positioning episode.

## Patentansprüche

1. Eine Werkzeugmaschine zum Gewindeschnitt, bestehend aus mindestens zwei Spindelblöcken (100, 200) mit Anbohrwerkzeugen (10), die über einen Mechanismus (400, 300) miteinander verbunden sind, der die Anpassung des Abstands zwischen den Rotationsachsen der Spindeln (100, 200) und der Bewegung der Spindeln (100, 200) relativ zueinander parallel in Richtung Rotationsachsen ermöglicht, **dadurch gekennzeichnet, dass** jeder Spindelblock aus einer Endstopp-Abstandshülse (20) mit einem Kraftsensor, einer Werkzeughalterung (50) am Rotorteil des Spindelantriebs (80) und einem Spindelblockgehäuses (90) am Statorbauteil des Spindelantriebs (80) besteht.

2. Die Werkzeugmaschine gemäß Anspruch 1, des Weiteren bestehend aus einem zusätzlichen Manipulator (500) zum Ausführen von Hilfsaufgaben, während die Spindelblöcke die wesentliche Aufgabe des Gewindeschnitts ausführen.

3. Ein Bausatz bestehend aus der Werkzeugmaschine gemäß Anspruch 1 oder Anspruch 2 und erweiterbaren Verriegelungsstangen, welche die Anbohrwerkzeuge ersetzen können und somit den Apparat in eine universelle, selbstangetriebene Plattform zur Bearbeitung von Lochmustern umfunktionieren.

4. Ein Verfahren zum Gewindeschnitt mit der Werkzeugmaschine entweder gemäß Anspruch 1 oder Anspruch 2, wobei
- die Werkzeugmaschine gegenüber dem gefertigten Teil durch eines der Anbohrwerkzeuge (10) in einem Spindelblock (100 oder 200) arretiert ist, während
- das andere Werkzeug (10) im anderen Spindelblock (200 oder 100) das Gewinde im nächsten Loch schneidet,
- wenn das andere Werkzeug (10) das Ende des Gewindes erreicht, arretiert sich der Spindelrotor im Loch durch Dehnung des Anbohrwerkzeugs (10) selbst und drückt die Abstandshülse (20) zusammen, danach
- wird die erste Spindel rückwärts bewegt, womit der Rotor des ersten Spindelblocks (100 oder 200) arretiert wird,
- nachdem das Anbohrwerkzeug des ersten Spindelblocks (100 oder 200) das Loch verlassen hat, kann sich der zweite Spindelblock (200 oder 100) frei drehen, wenn danach
- Kraft auf die zweite Spindel ausgeübt wird, dreht sich die Vorrichtung um die Achse der zweiten Spindel und positioniert die erste Spindel über dem nächsten Loch,
- die Spindeln ändern ihre Rollen und der Zyklus wiederholt sich, bis alle Löcher im Ausschnitt angebohrt sind.

5. Das Verfahren gemäß Anspruch 4, wobei der Antrieb (400), der den Abstand zwischen den Spindeln steuert, betrieben wird, um den Abstand zwischen den Löchern und den Spindeln anzupassen.

6. Das Verfahren gemäß Anspruch 4, wobei die Antriebe (80) der Spindelblöcke (100, 200) doppelte Funktionen aufweisen - erstens als Antrieb, der Kraft für das Werkzeug (10) beim Anbohrvorgang liefert, und zweitens als Antrieb, der die Vorrichtung in Position bewegt.

## Revendications

1. Une machine-outil de filetage comprenant au moins deux blocs de broches (100, 200) avec des outils de taraudage (10), reliés entre eux par un mécanisme (400, 300) qui permettra de régler la distance entre les axes de rotation des broches (100, 200) et le mouvement des broches (100), 200) les uns par rapport aux autres dans la direction parallèle aux axes de rotation, **caractérisé en ce que** chaque bloc de broche comprend une douille d'écartement à butée dure (20) avec un capteur de force, un porte-outil (50) fixé à la partie rotor de l'entraînement de broche (80) et un boîtier de bloc de broche (90) fixé à la partie stator de l'entraînement de broche (80)

2. La machine-outil selon la revendication 1 comprend en outre un manipulateur supplémentaire (500) pour effectuer des tâches auxiliaires, tandis que les blocs de broche effectuent la tâche principale de coupe du filet.

3. Un kit comprenant la machine-outil selon la revendication 1 ou la revendication 2 et des tiges de verrouillage extensibles, qui peuvent remplacer les outils de taraudage, convertissant ainsi l'appareil en une plateforme automotrice universelle pour travailler dans des modèles de trous.

4. Procédé de filetage avec la machine-outil selon la revendication 1 ou la revendication 2, dans lequel
- la machine-outil est verrouillée à la pièce fabriquée au moyen d'un des outils de taraudage (10) dans un bloc de broche (100 ou 200), tandis que
- l'autre outil (10) dans l'autre bloc de la broche (200 ou 100) coupe le filet dans le trou suivant,
- lorsque l'autre outil (10) atteint l'extrémité du filetage, le rotor de la broche se bloque dans le trou en étirant l'outil de taraudage (10) et en comprimant la douille d'écartement (20), puis
- la première broche est inversée, ce qui déverrouille le rotor du premier bloc de broche (100 ou 200),
après que l'outil de taraudage du premier bloc de broche (100 ou 200) soit sorti du trou, le deuxième bloc de broche (200 ou 100) est libre de tourner, puis
- L'application d'un couple à la deuxième broche fera maintenant tourner le dispositif autour de l'axe de la deuxième broche et positionnera la première broche au-dessus du trou suivant,
- les broches changent de rôle et le cycle se répète jusqu'à ce que tous les trous dans le détail soient taraudés.

5. La méthode selon la revendication 4, dans laquelle l'entraînement (400) contrôlant la distance entre les broches est actionnée pour faire correspondre la distance entre les trous et les broches.

6. La méthode selon la revendication 4, dans laquelle les entraînements (80) des broches (100, 200) agissent dans des fonctions doubles, d'abord comme un entraînement, qui fournit le couple pour l'outil (10) dans l'épisode de taraudage, et ensuite comme un entraînement, qui déplace le dispositif dans l'épisode de positionnement.
